# EUROPEAN PATENT SPECIFICATION

(11) **EP 2 429 249 B1**
(45) Date of publication and mention of the grant of the patent: **17.10.2012**
(21) Application number: 10290488.5
(22) Date of filing: 14.09.2010
(51) Int. Cl.: H04W 52/34, H04W 16/32, H04W 72/04

(54) **Method for inter-cell interference coordination in a cellular communication network, network element of a cellular communication network, and cellular communication network**
Verfahren zur Interferenzkoordination zwischen Zellen in einem zellularen Kommunikationsnetzwerk, Netzwerkelement eines zellularen Kommunikationsnetzwerks und zellulares Kommunikationsnetzwerk
Procédé de coordination d'interférence entre cellules dans un réseau de communication cellulaire, élément de réseau d'un réseau de communication cellulaire et réseau de communication cellulaire

(43) Date of publication of application: 14.03.2012
(73) Proprietor: Alcatel Lucent, 75007 Paris (FR)
(72) Inventor: Gerlach, Christian Georg, Dr., 71254 Ditzingen (DE); Stanze, Oliver, 70499 Stuttgart (DE); Cesar, Bozo, 70439 Stuttgart (DE)
(74) Representative: Wetzel, Emmanuelle

(56) References cited:
- EP-A1- 1 594 260
- WO-A2-2007/126373
- US-A1- 2010 087 203
- US-A1- 2010 216 486
- QUALCOMM EUROPE: "Carrier Aggregation in Heterogeneous Networks", 3GPP DRAFT; R1-090357, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090108, 8 January 2009 (2009-01-08), XP050318263, [retrieved on 2009-01-08]
- HUAWEI: "UE ICIC measurement", 3GPP DRAFT; R2-083543, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Warsaw, Poland; 20080624, 24 June 2008 (2008-06-24), XP050140918, [retrieved on 2008-06-24]

## Description

### Field of the invention

The present invention refers to a method for inter-cell interference coordination (ICIC) in an cellular communication network comprising multiple macro base stations controlling a macro cell of the cellular network and at least one pico base station (also referred to as low power base station) controlling a pico cell (also referred to as low power cell) of the cellular network, said pico cell being located at least partially within at least one macro cell. Furthermore, the present invention refers to a network element of such a cellular communication network. Moreover, the present invention refers to a cellular communication network comprising multiple base stations controlling a macro cell of the cellular network and at least one pico base station controlling a pico cell of the cellular network, said pico cell being located at least partially within at least one macro cell.

### Background

Inter-cell interference coordination (ICIC) is known in the art. In particular, a base station (a so-called eNodeB) of the long term evolution (LTE) cellular radio access network and its successor LTE advanced may coordinate the allocation of radio transmission resources with neighbouring base stations in order to reduce inter-cell interference and to improve an overall spectral efficiency and/or an overall throughput of the radio access network.

A known approach of inter-cell interference coordination is fractional frequency reuse. According to fractional frequency reuse, a base station of a macro cell uses a first portion of radio transmission resources for transmitting a radio signal, a transmission power of which can reach a maximum transmit power. By using the first portion of radio transmission resources the base station can reach terminals of the cellular communication networks located at an edge of the cell controlled by the base station. The base station uses another portion of the transmission resources with a limited transmission power in order to reduce inter-cell interference with neighbouring macro cells. A base station of the neighbouring macro cell may use the further portion of the transmission resources for communicating with a terminal located at a cell edge of said neighbouring macro cell. Therefore, the base station may use all portions of the transmission resources for terminals located in an inner region of the cell and use only a part of the transmission resources for terminals located in a cell edge region of the cell.

The known approaches for inter-cell interference coordination allow to reduce the interference of neighbouring macro cells. However, the known approaches of inter-cell interference coordination do not allow for control the interference between a macro cell and a pico cell located within the macro cell.

The 3GPP TSG RAN WG1 draft R1-090357 "Carrier Aggregation in Heterogeneous Networks" by Qualcomm Europe discloses a method for interference management for heterogeneous networks that consist of cells of different power classes.

The published patent application US 2010/0216486 A1 discloses interference control in a communication system with different kinds of base stations.

The published patent application EP 1 594 260 A1 as well as the published patent application US 2010/0087203 A1 discloses a method for inter-cell interference coordination.

The published patent application WO 2007/126373 A2 discloses a power allocation scheme for dynamic allocation of transmission power to users of a cellular mobile radio system.

The 3GPP TSG RAN WG2 draft R2-083543 "UE ICIC measurement" by Huawei discusses a possible approach for reducing overhead caused by measurement reports in a cellular network.

### Summary

The object of the present invention is to provide a method, a network element, and a cellular communication network that improve a throughput of cells of a cellular communication network and/or the spectral efficiency of transmission resources of the cellular network. This object is solved by a method according to claim 1, a network element according to claim 11, and a cellular communication network according to claim 14. Further embodiments are according to the dependent claims.

In an example, a method for inter-cell interference coordination in a cellular communication network is suggested, the network comprising multiple macro base stations controlling at least one of multiple macro cells of the cellular network and at least one pico base station controlling at least one pico cell of the cellular network, said pico cell being located at least partially within at least one macro cell, said method comprising: assigning a first portion of radio transmission resources of the cellular network and a second portion of said transmission resources to each of said multiple macro base stations for transmitting a radio signal using the first portion and the second portion of said transmission resources and limiting a maximum transmission power of the radio signal to be transmitted using the second portion to a transmit power limit, the transmit power limit being less than a maximum transmit power of the signal to be transmitted using the first portion, wherein the method further comprises assigning the second portion of said transmission resources to the pico base station for transmitting the radio signal using the second portion of said transmission resources. In an example, at least a part of the first portion is assigned to the pico base station, too.

In other words, a base station of a macro cell uses a transmission power that is limited to said transmit power limit when transmitting a radio signal using the second portion of the transmission resources so that a pico base station of the pico cell may use the second portion for communicating with terminals registered with the pico base station with low interference. Preferably, the pico base stations uses the second portion of transmission resources for communicating with terminals located within an border region of the pico cell, i.e., for communicating with terminals located rather far away from the pico cell base station. Limiting the maximum transmission power of the radio signal transmitted by the macro base stations using the second portion allows not only for reducing an interference between the macro cells and the pico cells embedded therein but also increases a cell size of the pico cell.

The radio resources may be partitioned into the first portion and the second portion according to time. Time may be subdivided into multiple consecutive time units. A first subset of these time units may correspond to the first portion, whereas a second subset of the time units may correspond to the second portion. In an example, the radio transmission resources are partitioned according to frequency, i.e., the first portion corresponds to a first frequency range and/or the second portion corresponds to a second frequency range of the transmission resources.

In LTE, transmission resources are subdivided in the frequency domain into multiple consecutive physical resource blocks (PRB). In time domain, the transmission resources are subdivided into multiple consecutive subframes of a radio frame. Accordingly, when using the method in connection with LTE, the first portion may correspond to a set of one or more physical resource blocks and/or the second portion may correspond to a second set of one or more physical resource blocks, the first and the second set being disjunctive. In an example, the first portion and/or the second portion may correspond to a set of consecutive physical resource blocks. It should be noted that the present invention may be applied in connection with LTE but can also be applied in connection with a cellular communication network of a different type.

In an example, the cellular network has a group of multiple pico base stations and the method comprises assigning the second portion of the transmission resources to all pico base stations of said group. Thus, all pico base stations of that said group may transmit a radio signal within the second portion of the transmission resources. In other words, all pico base stations of the group, preferably all pico base stations of the cellular network, use the identical second portion of the transmission resources in order to communicate with at least one terminal registered with that pico base station.

In an example, the transmit power limit is a predefined static value that can be changed manually only. In another example, the transmit power limit is determined semi-statically or dynamically depending on an operating status of the cellular communication network, preferably the macro base stations, the pico base station, and/or the terminal.

In particular, in a preferred embodiment, the method comprises determining at least one characteristic of communication traffic related to at least one terminal registered with a macro base station and/or the pico base station and determining the transmit power limit depending on said characteristic. Adapting the transmit power limit to the traffic allows for adaptively changing a size, i.e., a coverage area, of the pico cell.

In an example, determining the at least one characteristic comprises retrieving buffer status information of a transmit buffer of a macro base station, a pico base station and/or the terminal. Information about the transmit buffer allows from estimating the amount of data to be transferred between the macro base station or the pico base station and the terminal. For instance, if the terminal is registered with the pico base station and is communicating with the pico base stations using the second portion of the transmission resources and if the transmit buffer has many data packets stored to be transmitted over the transmission resources then the transmit power level may be decreased in order to reduce interference between the pico cell and the macro cell in which the pico cell is embedded so that the throughput for the data communication between the pico base station and the terminal can be improved.

Preferably, the method comprises determining the transmit power limit depending on a parameter indicating a density of terminals within a macro cell and/or a pico cell, preferably depending on a number of terminals registered with a certain macro base station or pico base station. For instance, a number of terminals registered with the pico base station can be determined. If the number of terminals registered with the pico base station is low then the transmit power limit may be decreased in the macro base station in order to increase the coverage area.of the corresponding pico cell so that additional terminals can register with the pico base station.

In an example, the method comprises assigning the first portion of the transmission resources to the pico cell and limiting the transmission power of a radio signal to be transmitted by the pico base station using the first portion to a pico cell transmit power limit, the pico cell transmit power limit being less than a maximum transmit power of the signal to be transmitted within the pico cell by the pico base station.

Preferably, the method comprises scheduling at least some terminals registered with the pico base station and located at a border region of the pico cell for transmissions using the second portion of the transmission resources and/or scheduling at least some terminals registered with a macro base station and located at the border region of the pico cell for transmissions using the first portion of the transmission resources and/or scheduling at least some terminals registered with a macro base station and located outside of any border region of a pico cell for transmission using the second portion of the transmission resources. Said scheduling may be performed by a scheduler of a macro base station and/or a scheduler of the pico base station.

According to an example, the transmit power limit is determined separately for each macro base station. Determining separate values of the transmit power limit for the individual macro base stations allows for a fine-grained inter-cell interference coordination. In another example, the transmit power limit is determined as a single value for multiple macro base stations. Defining a single value simplifies the implementation of the method.

In an example, the partitioning of the radio transmission resources into the first portion and the second portion is static. In another example, the first portion and/or the second portion is determined depending on said characteristic of the traffic related to at least one terminal and/or said parameter indicating the density of terminals. That is, the first portion and/or the second portion may be determined e.g. semi-statically depending on the operating status of the cellular network.

In an example, the transmission resources comprise multiple channels, each of them occupying a separate frequency band, and wherein the second portion of the radio resources corresponds to one of said multiple channels.

In another example, the transmission resources comprise a single channel subdivided into multiple sub-bands, the first portion and/or the second portion corresponding to a set of sub-bands. Preferably, the first portion and/or the second portion corresponds to a set of multiple consecutive sub-bands. These sub-bands may be arranged consecutively in the frequency domain. In an example, a multi carrier modulation scheme such as orthogonal frequency division modulation (OFDM) is applied. A channel may correspond to a single OFDM carrier. A sub-band may correspond to multiple consecutive subcarriers of the OFDM carrier. In LTE, twelve consecutive subcarriers correspond to a Physical Resource Block (PRB). In an example, a sub-band corresponds to one PRB or multiple consecutive PRBs.

In an example, the method comprises assigning a third portion of said radio transmission resources, preferably a third frequency range of the transmission resources, to at least one macro base station for transmitting the radio signal using the third portion and limiting a maximum transmission power of the radio signal to be transmitted using the third portion to a further transmit power limit being less than a maximum transmit power of the signal to be transmitted using the first portion. The third portion of the radio transmission resources can be used by a neighbouring macro base station for communicating with terminals located at a cell border between neighbouring macro cells. As a consequence, not only interference between the pico cell and the macro cells is coordinated but also interference between a neighbouring macro cells is coordinated. Thus, intra-cell-interference is further reduced and spectral efficiency and/or the overall throughput of the cellular network is further improved.

Another example consists in a network element of a cellular communication network comprising multiple macro base stations controlling at least one of multiple macro cells of the cellular network and at least one pico base station controlling at least one pico cell of the cellular network, said pico cell being located at least partially within at least one macro cell, said network element comprising control circuitry for inter-cell interference coordination arranged for: assigning a first portion of radio transmission resources of the cellular network and a second portion of said transmission resources to each of said multiple macro base stations for transmitting a radio signal using the first portion and the second portion of said transmission resources and limiting a maximum transmission power of the radio signal to be transmitted using the second portion to a transmit power limit being less than a maximum transmit power of the signal to be transmitted using the first portion, wherein said control circuitry is arranged for assigning the second portion of said transmission resources to the pico base station for transmitting the radio signal using the second portion of said transmission resources. This network element as the above-mentioned advantages of the method described above.

Preferably, the control circuitry is arranged for executing a method according to the present invention, examples of which are described above. In an example, the control circuitry comprises a processor programmed for executing a method according to the present invention.

In an example, the network element is a macro base station of the cellular network or a pico base station of the cellular network.

A further example consists in a cellular communication network comprising multiple macro base stations controlling at least one of multiple macro cells of the cellular network and at least one pico base station controlling at least one pico cell of the cellular network, said pico cell being located at least partially within at least one macro cell, said network being arranged for: assigning a first portion of radio transmission resources of the cellular network and a second portion of said transmission resources to each of said multiple macro base stations for transmitting a radio signal using the first portion and the second portion of said transmission resources and limiting a maximum transmission power of the radio signal to be transmitted using the second portion to a transmit power limit being less than a maximum transmit power of the signal to be transmitted using the first portion, wherein the network is arranged for executing a method according to one of claims 1 to 10, examples of which are described above.

This cellular communication network has the above-named advantages of the above described method and network element.

### Brief description of the figures

Examples and further advantages of the present invention are shown in the figures and described in detail hereinafter.
- Figure 1: shows a cellular communication network;
- Figure 2: shows network elements of the cellular network shown in Figure 1;
- Figure 3: shows diagrams of radio transmissions resource allocations;
- Figure 4: shows diagrams of radio transmission resource allocations similar to Figure 3 according to a different example; and
- Figure 5: shows a further cellular network.

### Description

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventors to furthering the art, and are to be construed as being _ without limitation to such specifically recited examples and conditions. Moreover, all statements herein reciting principles, aspects, and examples of the invention, as well as specific examples thereof, are intended to encompass equivalents thereof.

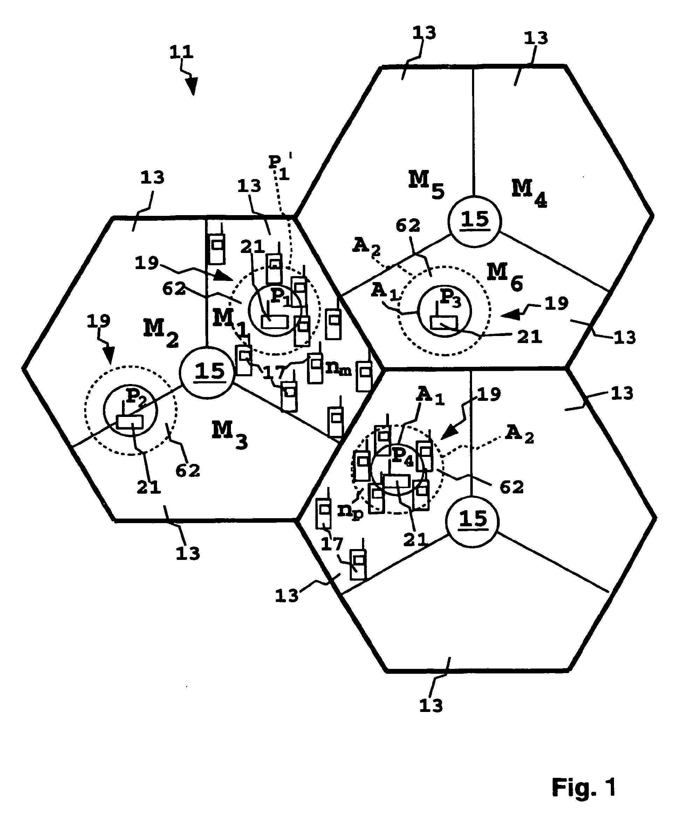

Figure 1 shows a cellular network 11 having multiple macro cells 13. Each macro cell 13 has a macro base station 15 arranged for controlling the macro cell 13, in particular terminals 17 located within that macro cell 13 and registered ,with the macro base station 15 of that macro cell 13. In the shown example a single macro base station 15 is assigned to three macro cells 13. In another example, only one macro cell 13 is assigned to a macro base station 15.

Furthermore, the cellular network 11 has multiple pico cells 19, each of them having a pico base station 21. In the shown example, each pico base station 21 controls exactly one pico cell 19 and terminals 17 registered with the corresponding pico base station 21. A maximum transmission power of a radio signal transmitted by a pico base station 21 is less than a maximum transmission power of a radio signal sent by the macro base station 15. Consequently, the size of a pico cell 19, i.e., the coverage area of a pico cell, is less than the size of a macro cell 13. The pico cells 19 are overlapping with at least one macro cell 13. A pico base station 21 is preferably located within an area where a density of terminals 17 is comparatively high. At least a part of the terminals 17 located within a pico cell 19 may leave the macro cell 13 and register with the pico base station 21 of the pico cell 19. In this way, installing pico base stations 21 in areas with a high density of terminals 17 helps to improve a quality of service and/or a channel capacity experienced by users of the terminal 17 located in that area having a high terminal density.

The cellular network 11 may be part of a Long Term Evolution (LTE) or Long Term Evolution advanced (LTE advanced) mobile communication system. Both LTE and LTE advanced are specified by the Third Generation Partnership project (3GPP). However, the present invention is not limited to LTE or LTE advanced. It may be applied in connection with different types of cellular networks or mobile communication systems, too.

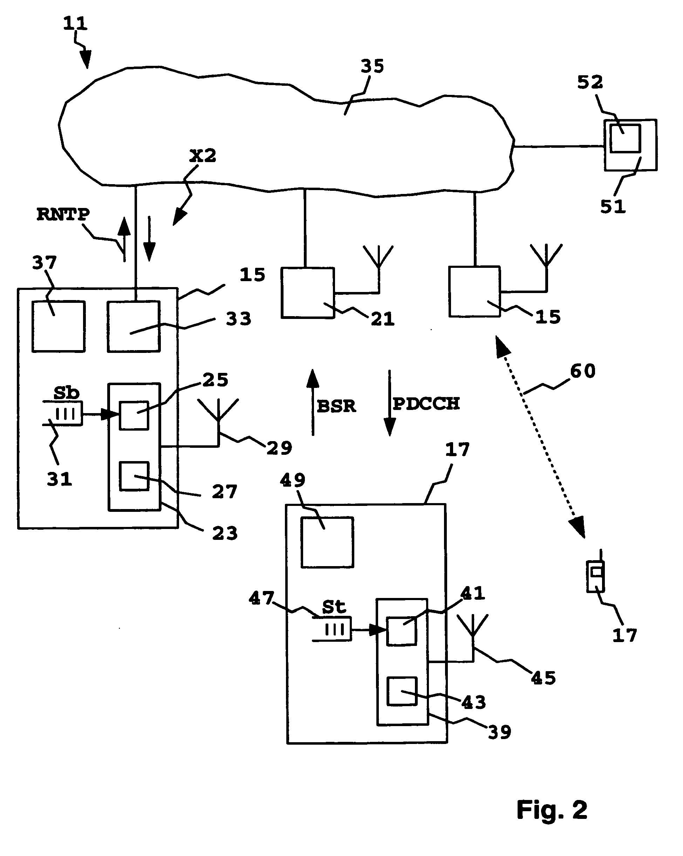

As shown in Figure 2, each macro base station 15 comprises a first transceiver 23 having a first transmitter 25 and a first receiver 27. The first transmitter 25 and the first receiver 27 are coupled with a first antenna 29 such that the first transmitter 25 can transmit the radio signal to a terminal 17 and the first receiver 27 can receive a radio signal from a terminal 17. The macro base station 15 comprises a first transmit buffer 31 coupled with the first transmitter 25 and arranged for buffering data packets to be transmitted by the first transmitter 25. Moreover, the macro base station 15 has a network interface circuitry 33 that is connected to an interconnection network 35 of the cellular network 11. The interconnection network 35 may be a fixed network or a wireless network. In an example, at least one pico base station 21 is a relay node connected by means of a radio link to a macro base station 15 functioning as a donor base station to which the relay node is assigned.

Furthermore, the macro base station 15 has a first control circuitry 37 arranged for controlling the macro base station 15. The pico base station 21 has essentially the same configuration like the macro base station 15. In particular, the pico base station 21 also comprises the first transceiver 23, the transmit buffer 31, the network interface circuitry 33, and the first control circuitry 37. The first control circuitry 37 may comprise a scheduler for scheduling transmissions between the corresponding base station 15, 21 and the terminals 17 registered with that base station 15, 21. Both the macro base stations 15 as well as the pico base stations 21 are interconnected to each other by means of the interconnection network 35.

Each terminal 17 comprises a second transceiver 39 having a second transmitter 41 and a second receiver 43. The second transmitter 41 is coupled to a second antenna 45 of the terminal 17 for transmitting a radio signal to a base station 15, 21. The second receiver 43 is coupled with the second antenna 45 for receiving a radio signal from a base station 15, 21. The terminal 17 further comprises a second transmit buffer 47 for storing data packets to be transmitted by the second transmitter 41. A second control circuitry 49 of the terminal 17 is arranged for controlling the terminal 17. Both the first control circuitry 37 and the second control circuitry 49 may comprise a processor such as a micro computer, in particular a microcontroller, programmed for controlling the base station 15, 21 or the terminal 17. In particular, the first control circuitry 37 may be arranged or programmed for executing a method for inter-cell interference coordination.

In an example, the network 11 may comprise a central network element 51 connected to the interconnection network 35. The central network element 51 may comprise third control circuitry 52, preferably comprising a processor, arranged and/or programmed for executing a method for inter-cell interference coordination. In another example, the central network element 51 is omitted.

In LTE or LTE advanced, the base station 15, 21 is also referred to as enhanced NodeB (eNodeB). The terminal is also referred to as User Equipment (UE).

In the following, a method for inter-cell interference coordination (ICOIC) is described in more detail. This method not only aims at coordinating the interference between a macro cell 13 and a pico cell 19 that is overlapped by this macro cell 13 but also aims at coordinating the interference between neighbouring macro cells 13.

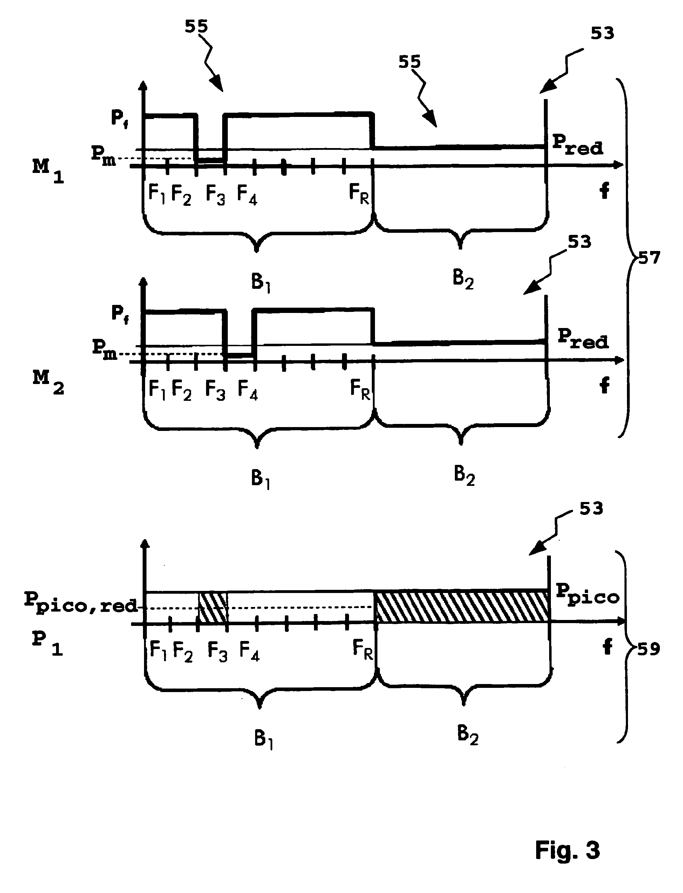

In one example, as shown in Figure 3, radio transmission resources 53 comprise two channels 55. Each channel 55 occupies a separate frequency band B₁ and B₂. In the shown example, the channels 55 are directly adjacent, i.e., there is no gap between the two frequency bands B₁ and B₂. In another example, the channels 55 are not directly adjacent and there is a gap between the two frequency bands B₁ and B₂. The channels 55 correspond to two portions of the radio transmission resources 53, the first frequency band B₁ corresponding to a first portion of the transmission resources and the second frequency band B₂ corresponding to a second portion of the transmission resources.

According to the method, the transmission resources 53 are assigned to the macro base stations 15 according to a macro cell resource assignment 57 shown in Figure 3. The first portion of the transmission resource 53, i.e. the first frequency band B₁ is assigned to the macro cells 13. That is, the macro base stations 15 may transmit the radio signal using at least a part of the first frequency band B₁ with a maximum transmit power P_{f}. The second frequency band B₂ is assigned to the macro cells 13, too. However, when using the second frequency band B₂, the macro base stations 15, limit the transmission power of the radio signal to a transmit power limit P_{red}, i.e. , the macro base stations 15 transmit with a reduced transmission power. However, the transmission power that can be applied when transmitting using the first frequency band B₁ is not limited to the transmit power limit P_{red}.

According to the method, both frequency bands B₁, B₂ are assigned to the pico cell 19 as shown in a diagram of a pico cell resource assignment 59. In an example, the whole first frequency band B₁ is assigned to the pico cell 19. In another example, only a part of the first frequency band B₁ is assigned to the pico cell 19 (see hedged regions in the diagram of the pico cell resource assignment 59).

Limiting the transmission power of the macro base stations 15 to the transmit power limit P_{red} has the effect that the coverage area of the pico cells 19 increases (so-called "food print increase"). Figure 1 shows a coverage area A₁ of the pico cells 19 resulting if the macro base stations 15 transmit the radio signal using the second frequency band.B₂ with unlimited transmission power. The area A₂ corresponds to the coverage area of the pico cell 19 resulting when the transmission power of the macro base stations 15 is limited to the transmit power limit P_{red} when transmitting using the second frequency band B₂. The coverage area A₁, A₂ correspond to the area in which the terminals 17 can receive control channel data transmitted by the corresponding pico base station 21. In LTE, this control channel may correspond to the Physical Downlink Control Channel (PDCCH), the Physical Broadcast Channel (PBCH), the Physical Control Format Indicator Channel (PCFICH), the Physical Hybrid ARQ Indicator Channel (PHICH), or to another control channel.

In order to coordinate interference between neighbouring macro cells 13 a third portion of the radio transmission resources 53 is assigned to the macro cells 13. When transmitting using the third portion of the transmission resources 53 the macro base stations 15 must limit the transmission power to a further transmit power limit Pₘ that is less than the maximum transmission power P_{f}. In the shown example, the third portion is a sub-band F₁, F₂,...,F_{R} of the first frequency band B₁. In general, the first frequency band B₁ is subdivided into R sub-bands F₁,..., F_{R}. To each macro cell 13 and the corresponding macro base station 15 a single sub band F₁,..., F_{R} is assigned. As a consequence, each macro base station 15 is transmitting within a certain macro cell 13 in an different sub band F₁,...,F_{R} with the transmission power limited to the further transmit power limit Pₘ.

Assuming that the cells denoted by M₁ and M₂ are neighbouring macro cells 13, the macro base station 15 of macro cell M₁ can communicate with a terminal 17 which is registered to M1 and located at a cell border between the cells M₁ and M₂ using the sub band F₄ in order to decrease in inter-cell interference between these two macro cells M₁ and M₂. Accordingly, the macro base station 15 of macro cell M₂ can use the sub band F₃ in order to communicate with terminal 17 which is registered to macro cell M₂ and located at the border between the macro cells M₂ and M₂. Partitioning the radio resources 53 into multiple third portions F₁, ...F_{R} (e.g. subbands F₁, ...,F_{R}) and assigning to each macro cell 13 of a group of R macro cells 13 a different third portion and configuring or controlling the corresponding macro base stations 15 such that they limit the transmit power within the third portion F₁, ..., F_{R} assigned to them to the further transmit power limit Pₘ is also referred to as "inverted reuse". The number of macro cells 13 and the number of different third portions is referred to as a reuse factor R.

In an example, the third portion assigned to a certain macro cell 13 is also assigned to a pico cell 19 that is located within that macro cell 13. The pico base station 21 of that pico cell 19 may use this portion for communicating with terminals 17 located at a region at the edge of the pico cell 19. In the example shown in Figure 3, the pico cell P₁ is located within the macro cell, M₁. Consequently, that pico cell P₁ uses not only the second frequency band B₂, but also the sub band F₃ for communicating with terminals 17 located in a region at the edge of the pico cell 19, i.e., near a border of the coverage area A₂. In order to efficiently assign the transmission resources of the second frequency band B₂ and the sub band F₃, i.e., the third portion assigned to the macro cell 13 in which the pico cell 19 is embedded, cross-carrier scheduling may be used. A control channel (e.g. a PDCCH) of the channel 55 relating to the second frequency band B₂ may signal to the terminals 17 that cross-carrier scheduling is applied.

In an example, a maximum transmission power P_{pico} of the radio signal transmitted by the pico base stations 21 does not vary depending on the frequency band B₁, B₂ or subband F₁, ..., F_{R} on which the signal is transmitted. In another example, the maximum transmission power P_{pico} depends on the frequency band B₁, B₂ or subband F₁, ..., F_{R} 55. For instance, the maximum transmission power P_{pico} for the first band B₁ may be limited to a pico cell transmit power limit P_{pico},_{red} being less than the maximum transmit power P_{pico} for the second band B₂. The pico base station 21 may schedule terminals 17 located near a border of the pico cell 19 preferably on the second band B₂- Moreover, the pico base station 21 may schedule terminals 17 located in an inner region of the pico cell 21 on the first band B₁. Furthermore, a macro base station 15 may schedule terminals 17 registered with a macro cell 13 controlled by this macro base station 15 and located at the border of the pico cell 19 preferably for transmission on the first band B₁.

In the shown example, the value of the transmit power limit P_{red} is adapted depending on the distribution of data traffic relating to the terminals 17 and/or the special density of the terminals 17.

To this end, at least one characteristic of communication traffic 60 related to at least one terminal 17 (i.e. received or transmitted by that terminal 17) may be determined. For example, status information sb of the first transmit buffer 31 of a base station 15, 21 and/or status information st of the second transmit buffer 47 of at least one terminal 17 may be retrieved. The terminal 17 may report the status information st to the base station 15, 21 with which it is registered by transmitting a buffer status report (BSR). The base stations 15, 21 and the central network element 51 may exchange this information sb, st over the interconnection network 35.

Furthermore, according to the method, at least one parameter indicating the density of terminal 17 within a macro cell 13 or a pico cell 19 may be determined. For example, a number nₘ of terminals 17 registered with a macro cell 13 and/or a number nₚ of terminal 17 registered with a pico cell 19 may be determined. The base stations 15, 21 and the central network element 51 may exchange this parameters nₘ, nₚ. After having acquired the characteristics sb, st of the traffic related to the individual terminal 17 and the parameters nₘ, nₚ indicating the density of terminal 17, the method may determine the value of the transmit power limit P_{red} depending on this characteristics sb, st, parameters nₘ, and/or nₚ.

In an example, the partitioning of the transmission resources 53 is adapted depending on the characteristic of the communication traffic related to at least one terminal 17, e.g., depending on the buffer status information sb, st, and/or depending on the spatial distribution of the terminals 17, e.g. on a parameter indicating the density of the terminals such as the number nₘ, n_{P} of terminals 17 located in a certain cell 13, 19.

The transmit power limit P_{red} and/or the partitioning of the radio resources 53 between the frequency band B₁ and B₂ may be optimised for maximizing a throughput for fair scheduling or guaranteed bit-rate scheduling in a group of macro cells 13 and pico cells 19 that are affected by inter-cell interference.

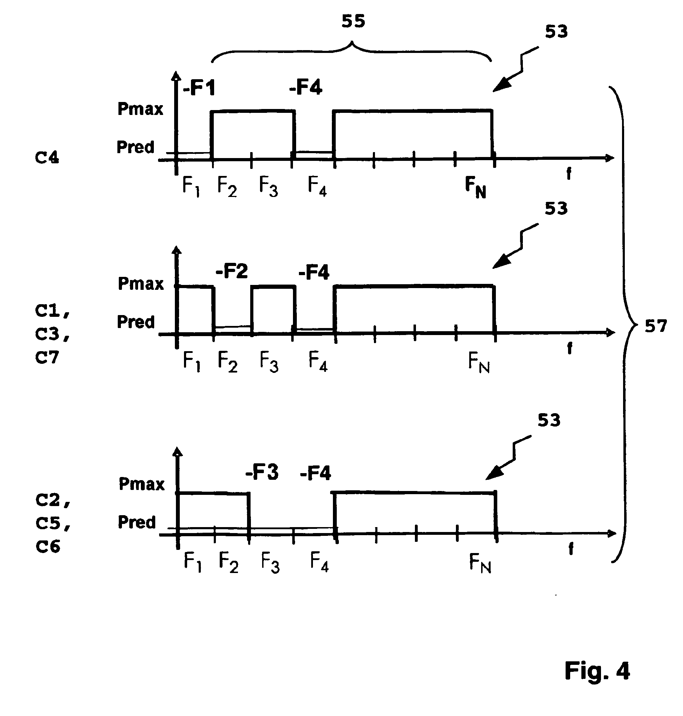

According to another example of the method according to the present invention, the radio resources 53 comprise a single frequency channel 55 only. This channel 55 is subdivided into multiple sub bands F₁,...F_{N}. The method provides the macro cell resource assignment 57 as indicated in the two diagrams depicted in Figure 4, assigning a first portion (all sub bands F₁, ...,F_{N} except the sub band F₄) to the macro cells 13 and the second portion (the sub band F₄) to the macro cells 13. The macro base stations 15 are allowed to use at least a part of the first portion F₁,...,F₃, F_{5,}---,F_{N} for sending a radio signal with the maximum transmission power Pₘₐₓ. However, the macro cell base stations 15 must limit the transmission power of a radio signal transmitted using the second portion F₄ to the transmit power limit P_{red}. Because all macro base stations 15 transmit with the limited transmission power when using the second portion F₄ the pico base stations 21 may use the second portion F₄ for communicating with terminals 17 located nearby a cell border of the corresponding pico cells 19.

Moreover, inverted reuse may be performed. For each macro cell 13 a third portion of the radio resources 53 is allocated and the corresponding macro base stations 15 must limit the transmission power to the further transmit power limit Pₘ when sending a radio signal using the third portion. In the shown example the further transmit power limit is equal to the transmit power limit, P_{red} = Pₘ. In another example these value differ from each other, Pred≠Pₘ.

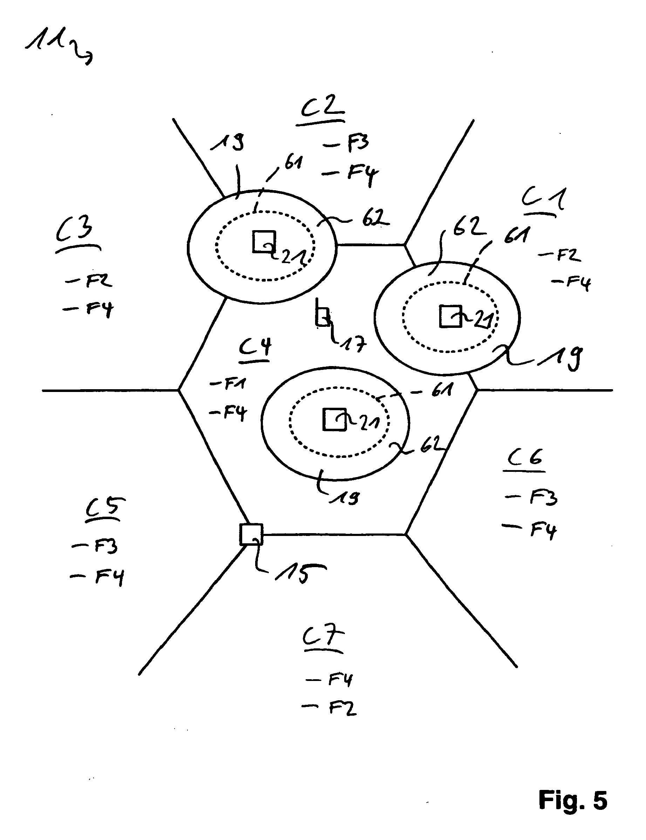

Figure 4 shows the macro cell resource allocation 57 used for macro cell C₁, ..., C₇ shown in Figure 5. In Figure 4 the second portion F₄ and the third portion F₃ of the transmission resources 53 that may be used with the limited transmission power only by a certain macro base station 15 are depicted. The three different macro cells resource assignments 57 shown in the three diagrams of Figure 4 are used for the macro cells C₁,...,C₇ depicted in Figure 5. Each macro cell C₁,...,C₇ has the same second portion F₄, whereas the third portion (one of F₁, F₂, F₃) of neighbouring macro cells is different in order to reduce inter-cell interference between neighbouring macro cells.

The exemplary cellular network 11 shown in Figure 5 has three pico cells 19, one of them being completely embedded into the macro cell C₄, another one overlapping with macro cells C₂, C₃, and C₄ and yet another one overlapping with macro cells C₁ and C₄. A terminal 17 may receive signals from different macro cells C₁.,...,C₇ and/or pico cells. All macro cells C₁,...,C₇ and all pico cells 19 have different cell identifiers (cell IDS). Thus, a reference signal in a downlink frame measured by the terminals 17 can be associated to the different cells C₁,...,C₇, 19. Signals being transmitted from different base stations 15, 21 can therefore distinguished by each terminal 17.

In an example, the pico base stations 21 use the transmission resources 53 without particular restrictions. For example, in the example shown in Figures 4 and 5 the pico base stations 21 may use a maximum transmission power for transmitting the radio signals using all sub bands F₁,...F_{N}. However, the maximum transmission power of a pico cell 21 is typically less than the maximum transmission power Pₘₐₓ of the macro cells C₁,...,C₇.

In another example, interference measurements are performed and additional restrictions regarding the usage of the transmission resources 53 by the pico base stations 21 are introduced depending on these measurements. The measurements may be carried out by the terminals 17 registered with the pico cells 19 and report it to their serving pico base stations 21. Introducing these additional restrictions further reduces inter-cell interference between the pico cells 19 and the macro cells C₁,...C₇ that they overlap. The measurements performed by the terminals may include pathloss measurements and interference measurements.

When deciding on introducing additional restrictions related to the pico cells 19, two exemplary cases can be distinguished.

In a first case, a pico cell 19 is located completely within one macro cell, i.e., that pico cell 19 overlaps only one macro cell. For example, Figure 5 shows a pico cell 19 that is located completely within the macro cell C₄. Terminal 17 located within that pico cell 19 report measurements to their serving pico base station 21 that indicates that these terminals 19 see the macro cell C₄ as the strongest interfering cell. In addition, the pico base station 21 may determine based on the measurements performed by the terminal whether the terminal 17 is located in an inner region 61 of the pico cell 19 or within a border region 62 of that micro cell 21. According to one example, terminals 21 located in the border region 62 are scheduled on the sub bands F₁ and/or F₄ because these sub bands F₁ F₄ are used with the limited power in the macro cell C₄ . In another example, the sub bands F₁ and F₄ are not used at all by the macro cell C₄, i.e., the transmit power limit P_{red} is set to zero. Preferably, the terminal 17 located in the inner region 61 of the pico cell may use all frequency sub-bands F₁,..,F_{N}.

Scheduling the terminals 17 located in the border region 62 of the pico cell 19 on the sub-bands F₁ and F₄ induces low interference with the surrounding macro cell C₄. Under ideal circumstances, the interference can be completely avoided.

In a second case, the pico cell 19 is located at a border between multiple macro cells. For example in Figure 5, there is one pico cell 19 that is located on the border between the macro cells C₁ and C₄. This pico cell 19 overlaps these two macro cells C₁, C₄. Terminals 17 located in the border region 62 of that pico cell 19 are scheduled on sub-band F₄ because the sub-band is used with limited transmit power P_{red} by the macro base stations 15 of macro cells. C₁ and C₄. In another example, the transmit power limit P_{red} is zero and the macro cells C₁ and C₄ do not use the sub-band F₄ at all. Terminals 17 located in the inner region 62 of that pico cell 19 may be scheduled on all frequency sub-bands with exception of sub-bands F₁ and F₂ which are used by the macro cells C₁ and C₄ for communicating with terminal 17 located on the border between them.

In another example, the terminals located in a border region 61 of a pico cell 19 are scheduled on those sub-bands that belong to the third portion of sub-bands of the macro cells that are overlapped by the pico cell 19. Moreover, the pico base station 21 may schedule terminals 17 located in the border region 62 of the corresponding pico cell 19 and within a certain macro cell on the sub-band that belongs to the third portion of that macro cell. For example, a terminal 17 located in the border region 62 of the pico cell 19 on the right hand side of Figure 5 and within the macro cell C₁ may be scheduled by the pico base station 21 of that pico cell on the sub-band F₂ which corresponds to the third portion of radio resources 53 assigned to that macro cell C₁.

If that terminal 17 moves to the macro cell C₄ without leaving the border region 62 of the pico cell 19 (and staying registered with the pico station 21) then the pico base station 21 may schedule the terminal 17 on sub-band F₁ because the sub-band F₁ corresponds to the third portion of radio resources 53 assigned to the macro cell C₄. Furthermore, the pico base station 21 may schedule the terminal 17 on the sub-band F₄ because all macro base stations 15 use this sub-band corresponding to the second portion of the radio resources 53 with the transmit power limited to the transmit power limit P_{red}.

The restrictions and limits regarding the transmit power of the sub-bands F₁,...,F_{N} may be configured statically or semi-statically. In an example according to which these restriction and limits are configured statically, the first portion of radio transmission resources of the cellular network and the second portion of said transmission resources are assigned statically to each of the multiple macro base stations for transmitting a radio signal using the first portion and the second portion of the transmission resources. Each of the multiple macro base stations is arranged for limiting a maximum transmission power of the radio signal to be transmitted using the second portion to the transmit power limit P_{red} less than the maximum transmit power P_{f} of the signal to be transmitted using the first portion.

In an example, the above-described method is executed by a network element of the cellular network 11, such as a base station 15, 21 or the central network element 51. The method may be executed by one of these network elements 15, 21, 51 or distributed on multiple network elements 15, 21, 51. In both cases, information about resource assignments 57, 59 may be exchanged between the network elements 15, 21, 51 over the interconnection network 35. To this end, the X₂ interface of LTE may be applied, which allows for information exchange between different base stations 15, 21. In particular, the base stations 15, 21 and the central network element 51 may exchange Relative Narrowband Transmit Power (RNTP) messages that indicate physical resource blocks (PRB) that are guaranteed to have a power allocation below a power threshold, e.g., the transmit power limit P_{red} or the further transmit power limit Pₘ.

To sum up, the method described above allows for reducing interference between a pico cell 19 overlapping one or more macro cells 13 by reserving a portion of the transmission resources 53 that may be used by the pico base stations 21 to communicate with terminals 17 located within the border region 61 of the corresponding pico cells 19. The macro base stations 15 transmit on this portion of the radio transmission resources 53 with a transmission power limited to the transmission power limit P_{red}. Alternatively, the macro base stations 15 do not transmit on this portion of the radio transmission resources 53 not at all. Furthermore, a inverted reuse scheme is used for coordinating interference between neighbouring macro cells and for further reducing the interference between the pico cells 29 and/or macro cells 13. Moreover, the method allows for increasing the size of a pico cell 19 without increasing a maximum transmit power of this pico cell 19.

## Claims

1. Method for inter-cell interference coordination in a cellular communication network (11) comprising multiple macro base stations (15) controlling at least one of multiple macro cells (13) of the cellular network (11) and at least one pico base station (21) controlling at least one pico cell (19) of the cellular network (11), said pico cell (19) being located at least partially within at least one macro cell (13), said method comprising
- assigning (57) a first portion (B₁; F1,..., F3, F5,...,FN) of radio transmission resources (53) of the cellular network (11) and a second portion (B₂; F4) of said transmission resources (53) to each of said multiple macro base stations (15) for transmitting a radio signal using the first portion (B₁; F₁,..., F3, F5, ..., FN) and the second portion (B₂; F4) of said transmission resources (53),
- limiting a transmission power of the radio signal to be transmitted using the second portion (B₂; F4) to a transmit power limit (P_{red}) being less than a maximum transmit power (P_{f}) of the signal to be transmitted using the first portion (B₁; F1,..., F3, F5,...,FN), and
- assigning (59) the second portion (B₂; F4) of said transmission resources (53) to the pico base station (21) for transmitting the radio signal using the second portion (B₂; F4) of said transmission resources,
**characterized in that** the method comprises
- determining at least one characteristic (sb, st) of communication traffic (60) related to at least one terminal (17) registered with a macro base station (15) and/or the pico base station (21) and determining the transmit power limit (P_{red}) depending on said characteristic (sb, st).

2. Method according to claim 1, wherein the first portion corresponds to a first frequency range (B₁) and/or the second portion corresponds to a second frequency range (B₂) of the transmission resources (53).

3. Method according to claim 1 or 2, wherein the cellular network (11) has a group of multiple pico base stations (19) and the method comprises assigning (59) the second portion (B₂; F4) of the transmission resources (53) to all pico base stations (19) of said group.

4. Method according to claim 1, wherein determining the at least one characteristic comprises retrieving buffer status information (sb, st) of a transmit buffer (31, 47) of a macro base station (15), a pico base station (21) and/or the terminal (17).

5. Method according to one of the precedent claims, wherein the method comprises determining the transmit power limit (P_{red}) depending on a parameter indicating a density of terminals (17) within a macro cell (13) and/or a pico cell (19), preferably depending on a number (nₘ, nₚ) of terminals (17) registered with a certain macro base station (21) or pico base station (21) .

6. Method according to one of the precedent claims, wherein the method comprises assigning the first portion (B₁; F1,..., F3, F5, ... , FN) of the transmission resources (53) to the pico cell (19) and limiting the transmission power of a radio signal to be transmitted by the pico base station (21) using the first portion (B₁; F1,..., F3, F5,...,FN) to a pico cell transmit power limit (P_{pico},_{red}), the pico cell transmit power limit (P_{pico},_{red}) being less than a maximum transmit power (P_{pico}) of the signal to be transmitted within the pico cell (19) by the pico base station (21).

7. Method according to one of the precedent claims, wherein the method comprises scheduling at least some terminals (17) registered with the pico base station (21) and located at a border region (62) of the pico cell (21) for transmissions using the second portion (B₂; F4) of the transmission resources (53) and/or scheduling at least some terminals (17) registered with a macro base station (13) and located at the border region (62) of the pico cell (19) for transmissions using the first portion (B₁; F1,..., F3, F5,...,FN) of the transmission resources (53) and/or scheduling at least some terminals (17) registered with a macro base station (13) and located outside of any border region (62) of a pico cell (19) for transmission using the second portion (B₂; F4) of the transmission resources (53).

8. Method according to one of the precedent claims, wherein the first portion (B₁) and/or the second portion (B₂) is determined depending on said characteristic (sb, st) of the traffic (60) related to at least one terminal (17) and/or said parameter (nₘ, nₚ) indicating the density of terminals (17).

9. Method according to one of claims 2 to 8, wherein the transmission resources (53) comprise multiple channels (55), each of them occupying a separate frequency band (B₁, B₂), and wherein the second portion of the radio resources corresponds to one channel (B₂) of said multiple channels.

10. Method according to one of the precedent claims, wherein the method comprises assigning a third portion of said radio transmission resources (53), preferably a third frequency range (F₁, F₂, F₃) of the transmission resources (53), to at least one macro base station (15) for transmitting the radio signal using the third portion (F₁, F₂, F₃) and limiting a maximum transmission power of the radio signal to be transmitted using the third portion (F₁, F₂, F₃) to a further transmit power limit (Pₘ) being less than a maximum transmit power (P_{f}) of the signal to be transmitted using the first portion.

11. Network element (15, 21, 51) of a cellular communication network (11) comprising multiple macro base stations (15) controlling at least one of multiple macro cells (13) of the cellular network (11) and at least one pico base station (21) controlling at least one pico cell (19) of the cellular network (11), said pico cell (19) being located at least partially within at least one macro cell (13), said network element (15, 21, 51) comprising control circuitry (37, 52) for inter-cell interference coordination arranged for
- assigning (57) a first portion (B₁; F1,..., F3, F5,...,FN) of radio transmission resources (53) of the cellular network (11) and a second portion (B₂; F4) of said transmission resources (53) to each of said multiple macro base stations (15) for transmitting a radio signal using the first portion (B₁; F1,..., F3, F5,...,FN) and the second portion (B₂; F4) of said transmission resources (53),
- limiting a maximum transmission power of the radio signal to be transmitted using the second portion (B₂ ; F4) to a transmit power limit (P_{red}) being less than a maximum transmit power (P_{f}) of the signal to be transmitted using the first portion (B₁; F1,..., F3, F5, ..., FN), and
- assigning (59) the second portion (B₂; F4) of said transmission resources (53) to the pico base station (21) for transmitting the radio signal using the second portion (B₂; F4) of said transmission resources (53),
**characterized in that** the control circuitry (37) is arranged for determining at least one characteristic (sb, st) of communication traffic (60) related to at least one terminal (17) registered with a macro base station (15) and/or the pico base station (21) and determining the transmit power limit (P_{red}) depending on said characteristic (sb, st).

12. Network element (15, 21, 51) according to claim 11, wherein the control circuitry (37, 52) is arranged for executing a method according to one of claims 2 to 10. 2

13. Network element according to claim 11 or claim 12, wherein the network element is a macro base station (15) of the cellular network (11) or a pico base station (21) of the cellular network (11).

14. Cellular communication network (11) comprising multiple macro base stations (15) controlling at least one of multiple macro cells (13) of the cellular network (11) and at least one pico base station (21) controlling at least one pico cell (19) of the cellular network (11), said pico cell (19) being located at least partially within at least one macro cell (13), **characterized in that** the network (11) is arranged for executing a method according to one of claims 1 to 10.

## Patentansprüche

1. Verfahren zur Interferenzkoordination zwischen Zellen In einem zellularen Kommunikationsnetzwerk (11), welches mehrere Makro-Basisstationen (15), die mindestens eine von mehreren Makrozellen (13) des zellularen Netzwerks (11) steuern, und mindestens eine Pico-Basisstation (21), die mindestens eine Picozelle (19) des zellularen Netzwerks (11) steuert, umfasst, wobei die besagte Picozelle (19) zumindest tellweise Innerhalb mindestens einer Makrozelle (13) angeordnet ist, wobei das besagte Verfahren umfasst:
- Zuweisen (57) einer ersten Teilmenge (B₁; F1,..., F3, F5,...,FN) von Funkübertragungsressourcen (53) des zellularen Netzwerks (11) und einer zweiten Teilmenge (B₂; F4) der besagten übertragungsressourcen (53) an eine jede der besagten mehreren Makro-Basisstationen (15) für die Übertragung eines Funksignals unter Verwendung der ersten Teilmenge (B₁; F1,..., F3, F5,..., FN) und der zweiten Teilmenge (B₂; F4) der besagten Übertragungsressourcen (53),
- Begrenzen einer Sendeleistung des unter Verwendung der zweiten Tellmenge (B₂; F4) zu übertragenden Funksignals auf eine Sendeleistungsgrenze (P_{red}), welche niedriger als eine maximale Sendeleistung (P₁) des unter Verwendung der ersten Teilmenge (B₁; F1₁,...₁ F3, F5₁...₁FN) zu übertragenden Signals Ist, und
- Zuweisen (59) der zweiten Teilmenge (B₂; F4) der besagten Übertragungsressourcen (53) an die Pico-Basisstation (21) für die Übertragung des Funksignals unter Verwendung der zweiten Teilmenge (B₂; F4) der besagten Übertragungsressourcen,
**dadurch gekennzeichnet, dass** das Verfahren umfasst:
- Bestimmen mindestens einer Eigenschaft (sb, st) von Kommunikationsverkehr (60) in Verbindung mit mindestens einem Endgerät (17), welches bei einer Makro-Basisstation (15) und/oder der Pico-Basisstation (21) angemeldet ist, und Bestimmen der Sendeleistungsgrenze (P_{red}) in Abhängigkeit von der besagten Eigenschaft (sb, st).

2. Verfahren nach Anspruch 1, wobei die erste Tellmenge einem ersten Frequenzbereich (B₁) entspricht, und/oder die zweite Teilmenge einem zweiten Frequenzbereich (B₂) der Übertragungsressourcen (53) entspricht.

3. Verfahren nach Anspruch 1 oder 2, wobei das zellulare Netzwerk (11) eine Gruppe von mehreren Pico-Basisstationen (19) aufweist und das Verfahren das Zuweisen (59) der zweiten Teilmenge (B₂; F4) der Übertragungsressourcen (53) an alle Pico-Basisstationen (19) der besagten Gruppe umfasst.

4. Verfahren nach Anspruch 1, wobei das Bestimmen der mindestens einen Eigenschaft das Abfragen von Pufferstatusinformationen (sb, st) eines Sendepuffers (31, 47) einer Makro-Basisstation (15), einer Pico-Basisstation (21) und oder des Endgeräts (17) umfasst.

5. Verfahren nach einem der vorstehenden Ansprüche, wobei das Verfahren das Bestimmen der Sendeleistungsgrenze (P_{red}) in Abhängigkeit von einem Parameter, welcher eine Dichte von Endgeräten (17) Innerhalb einer Makrozelle (13) und/oder einer Picozelle (19) angibt, vorzugsweise in Abhängigkeit von einer Anzahl (nₘ, nₚ) von Endgeräten (17), die bei einer bestimmten Makro-Basisstation (21) oder Pico-Basisstation (21) angemeldet sind, umfasst.

6. Verfahren nach einem der vorstehenden Ansprüche, wobei das Verfahren das Zuweisen der ersten Tellmenge (B₁; F1,..., F3, F5_{,}....,FN) der Übertragungsressourcen (53) an die Picozelle (19) und das Begrenzen der Sendeleistung eines von der Pico-Basisstation (21) unter Verwendung der ersten Teilmenge (B₁; F_{1,}..., F3, F5,...,FN) zu übertragenden Funksignals auf eine Picozellen-Sendeleistungsgrenze (P_{picorred}) umfasst, wobei die Picozellen-Sendeleistungsgrenze (P_{picorred}) niedriger als eine maximale Sendeleistung (P_{pico}) des von der Pico-Basisstation (21) innerhalb der Picozelle (19) zu übertragenden Signals ist.

7. Verfahren nach einem der vorstehenden Ansprüche, wobei das Verfahren die Ablaufplanung mindestens einiger Endgeräte (17), die bei der Pico-Basisstation (21) angemeldet sind und sich In einem Grenzgeblet (62) der Picozelle (21) befinden, für Übertragungen unter Verwendung der zweiten Teilmenge (B₂; F4) der Übertragungsressourcen (53), und/oder die Ablaufplanung mindestens einiger Endgeräte (17), die bei einer Makro-Basisstation (13) angemeldet sind und sich in einem Grenzgebiet (62) der Picozelle (19) befinden, für Übertragungen unter Verwendung der ersten Teilmenge (B₁; F1,...., F3, F5,...,FN) der Übertragungsressourcen (53), und/oder die Ablaufplanung mindestens einiger Endgeräte (17), die bei einer Makro-Basisstation (13) angemeldet sind und sich außerhalb Irgendelnes Grenzgeblets (62) einer Picozelle (19) befinden, für Übertragungen unter Verwendung der zweiten Tellmenge (B₂; F4) der Übertragungsressourcen (53) umfasst.

8. Verfahren nach einem der vorstehenden Ansprüche, wobei die erste Teilmenge (B₁) und/oder die zweite Tellmenge (B₂) In Abhängigkeit von der besagten Eigenschaft (sb, st) des Verkehrs (60) In Verbindung mit mindestens einem Endgerät (17) und/oder von dem besagten Parameter (nₘ, nₚ), welcher die Dichte von Endgeräten (17) angibt, bestimmt wird.

9. Verfahren nach einem der Ansprüche 2 bis 8, wobei die Übertragungsressourcen (53) mehrere Kanäle (55) umfassen, von denen ein jeder ein separates Frequenzband (B₁, B₂) belegt, und wobei die zweite Tellmenge der Funkressourcen einem Kanal (B₂) der besagten mehreren Kanäle entspricht.

10. Verfahren nach einem der vorstehenden Ansprüche, wobei das Verfahren das Zuweisen einer dritten Teilmenge der besagten Funkübertragungsressourcen (53), vorzugsweise eines dritten Frequenzbereichs (F₁, F₂, F₃) der Übertragungsressourcen (53), an mindestens eine Makro-Basisstation (15) für die Übertragung des Funksignals unter Verwendung der dritten Teilmenge (F₁, F₂, F₃) und das Begrenzen einer maximalen Sendeleistung des unter Verwendung der dritten Tellmenge (F₁, F₂, F₃) zu übertragenden Funksignals auf eine weitere Sendeleistungsgrenze (Pₘ), die niedriger als eine maximale Sendeleistung (P_{f}) des unter Verwendung der ersten Teilmenge zu übertragenden Signals ist, umfasst.

11. Netzwerkelement (15, 21, 51) eines zellularen Kommunikationsnetzwerks (11), welches mehrere Makro-Basisstationen (15), die mindestens eine von mehreren Makrozellen (13) des zellularen Netzwerks (11) steuern, und mindestens eine Pico-Basisstation (21), die mindestens eine Picozelle (19) des zellularen Netzwerks (11) steuert, umfasst, wobei die besagte Picozelle (19) zumindest teilweise innerhalb mindestens einer Makrozelle (13) angeordnet ist, wobei das besagte Netzwerkelement (15, 21, 51) eine Steuerschaltungsanordnung (37, 52) für die interferenzkoordination zwischen Zellen umfasst, welche für das Durchführen der folgenden Schritte ausgelegt Ist:
- Zuweisen (57) einer ersten Tellmenge (B₁; F1,..., F3, F5,..., FN) von Funkübertragungsressourcen (53) des zellularen Netzwerks (11) und einer zweiten Teilmenge (B₂; F4) der besagten Übertragungsressourcen (53) an eine jede der besagten mehreren Makro-Basisstationen (15) für die Übertragung eines Funksignals unter Verwendung der ersten Teilmenge (B₁; F1,..., F3, F5,..., FN) und der zweiten Teilmenge (B₂; F4) der besagten Übertragungsressourcen (53),
- Begrenzen einer maximalen Sendeleistung des unter Verwendung der zweiten Teilmenge (B₂; F4) zu übertragenden Funksignals auf eine Sendeleistungsgrenze (P_{red}), welche niedriger als eine maximale Sendeleistung (P_{f}) des unter Verwendung der ersten Teilmenge (B₁; F1,..., F3, F5,..., FN) zu übertragenden Signals ist, und
- Zuweisen (59) der zweiten Teilmenge (B₂; F4) der besagten Übertragungsressourcen (53) an die Pico-Basisstation (21) für die Übertragung des Funksignals unter Verwendung der zweiten Teilmenge (B₂; F4) der besagten Übertragungsressourcen (53),
**dadurch gekennzeichnet, dass** die Steuerschaltungsanordnung (37) für das Bestimmen mindestens einer Eigenschaft (sb, st) von Kommunikationsverkehr (60) in Verbindung mit mindestens einem Endgerät (17), welches bei einer Makro-Basisstation (15) und/oder der Pico-Basisstation (21) angemeldet ist, und für das Bestimmen der Sendeleistungsgrenze (P_{red}) in Abhängigkeit von der besagten Eigenschaft (sb, st) ausgelegt ist.

12. Netzwerkelement (15, 21, 51) nach Anspruch 11, wobei die Steuerschaltungsanordnung (37, 52) für das Ausführen eines Verfahrens gemäß einem der Ansprüche 2 bis 10 ausgelegt ist.

13. Netzwerkelement nach Anspruch 11 oder Anspruch 12, wobei das Netzwerkelement eine Makro-Basisstation (15) des zellularen Netzwerks (11) oder eine Pico-Basisstation (21) des zellularen Netzwerks (11) Ist.

14. Zellulares Kommunikationsnetzwerk (11) mit mehreren Makro-Basisstationen (15), die mindestens eine von mehreren Makrozellen (13) des zellularen Netzwerks (11) steuern, und mindestens einer Pico-Basisstation (21), die mindestens eine Picozelle (19) des zellularen Netzwerks (11) steuert, wobei die besagte Picozelle (19) zumindest teilweise innerhalb mindestens einer Makrozelle (13) angeordnet Ist, **dadurch gekennzeichnet, dass** das Netzwerk (11) für das Ausführen einer Verfahrens gemäß einem der Ansprüche 1 bis 10 ausgelegt Ist.

## Revendications

1. Procédé de coordination d'interférence Intercellulaire dans un réseau de communication cellulaire (11) comprenant de multiples stations de base macro (15) commandant au moins une parmi de multiples macro-cellules (13) du réseau cellulaire (11) et au moins une station de base pico (21) commandant au moins une pico-cellule (19) du réseau cellulaire (11), ladite pico-cellule (19) étant située au moins partiellement dans au moins une macro-cellule (13), ledit procédé comprenant les étapes suivantes
- attribuer (57) une première partie (B₁ ; F₁,..., F3, F5,...,FN) de ressources de transmission radio (53) du réseau cellulaire (11) et une deuxième partie (B₂ ; F4) desdites ressources de transmission (53) à chacune desdites multiples stations de base macro (15) pour transmettre un signal radio en utilisant la première partie (B₁; F1,..., F3, F5,...,FN) et la deuxième partie (B₂ ; F4) desdites ressources de transmission (53),
- limiter une puissance de transmission du signal radio à transmettre en utilisant la deuxième partie (B₂ ; F4) à une limite de puissance de transmission (P_{red}) inférieure à une puissance de transmission maximum (P_{f}) du signal à transmettre en utilisant la première partie (B₁ ; F1,..., F3, F5,...,FN), et
- attribuer (59) la deuxième partie (B₂ ; F4) desdites ressources de transmission (53) à la station de base pico (21) pour transmettre le signal radio en utilisant la deuxième partie (B₂ ; F4) desdites ressources de transmission,
**caractérisé en ce que** le procédé comprend l'étape suivante
- déterminer au moins une caractéristique (sb, st) de trafic de communication (60) relatif à au moins un terminal (17) enregistré auprès d'une station de base macro (15) et/ou la station de base pico (21) et déterminer la limite de puissance de transmission (P_{red}) en fonction de ladite caractéristique (sb, st).

2. Procédé selon la revendication 1, dans lequel la première partie correspond à une première plage de fréquences (B₁) et/ou la deuxième partie correspond à une deuxième plage de fréquences (B₂) des ressources de transmission (53),

3. Procédé selon la revendication 1 ou 2, dans lequel le réseau cellulaire (11) présente un groupe de multiples stations de base pico (19) et le procédé comprend fattributinn (59) de la deuxième partie (B₂ ; F4) des ressources de transmission (53) à toutes les stations de base pico (19) dudit groupe,

4. Procédé selon la revendication 1, dans lequel la détermination de l'au moins une caractéristique comprend la récupération d'informations d'état de tampon (sb, st) d'un tampon d'émission (31, 47) d'une station de base macro (15), d'une station de base pico (21) et/ou du terminal (17).

5. Procédé selon l'une des revendications précédentes, le procédé comprenant la détermination de la limite de puissance de transmission (p_{red}) en fonction d'un paramètre indiquant une densité de terminaux (17) dans une macro-cellule (13) et/ou une pico-cellule (19), de préférence en fonction d'un nombre (nₘ, nₚ) de terminaux (17) enregistrés auprès d'une certaine station de base macro (21) ou station de base pico (21).

6. Procédé selon l'une des revendications précédentes, le procédé comprenant l'attribution de la première partie (B₁ ; F₁,..., F3, F5,...,FN) des ressources de transmission (53) à la pico-cellule (19) et la limitation de la puissance de transmission d'un signal radio à transmettre par la station de base pico (21) en utilisant la première partie (B₁ ; F1,..., F3, F5,...,FN) à une limite de puissance de transmission de pico-cellule (P_{pico}, _{red}), la limite de puissance de transmission de pico-cellule (P_{pico}, _{rad}) étant inférieure à une puissance de transmission maximum (P_{pico}) du signal à transmettre dans la pico-cellule (19) par la station de base pico (21).

7. Procédé selon l'une des revendications précédentes, le procédé comprenant la planification d'au moins quelques terminaux (17) enregistrés auprès de la station de base pico (21) et situés au niveau d'une région de bordure (62) de la pico-cellule (21) pour des transmissions utilisant la deuxième partie (B₂ ; F4) des ressources de transmission (53) et/ou la planification d'au moins quelques terminaux (17) enregistrés auprès d'une station de base macro (13) et situés au niveau de la région de bordure (62) de la pico-cellule (19) pour des transmissions utilisant la première partie (B₁ ; F₁,..., F3, F5,...,FN) des ressources de transmission (53) et/ou la planification d'au moins quelques terminaux (17) enregistrés auprès d'une station de base macro (13) et situés à l'extérieur d'une quelconque région de bordure (62) d'une pico-cellule (19) pour une transmission utilisant la deuxième partie (B₂ ; F4) des ressources de transmission (53).

8. Procédé selon l'une des revendications précédentes, dans lequel la première partie (B₁) et/ou la deuxième partie (B₂) est/sont déterminée(s) en fonction de ladite caractéristique (sb, st) du trafic (60) relatif à au moins un terminal (17) et/ou dudit paramètre (nₘ, nₚ) indiquant la densité de terminaux (17).

9. Procédé selon l'une des revendications 2 à 8, dans lequel les ressources de transmission (53) comprennent de multiples canaux (55), chacun d'eux occupant une bande de fréquence séparée (B₁, B₂), et dans lequel la deuxième partie des ressources radio correspond à un canal (B₂) desdits multiples canaux.

10. Procédé selon l'une des revendications précédentes, dans lequel le procédé comprend l'attribution d'une troisième partie desdites ressources de transmission radio (53), de préférence une troisième plage de fréquences (F₁, F₂, F₃) des ressources de transmission (53), à au moins une station de base macro (15) pour transmettre le signal radio en utilisant la troisième partie (F₁, F₂, F₃) et la limitation d'une puissance de transmission maximum du signal radio à transmettre en utilisant la troisième partie (F₁, F₂, F₃) à une autre limite de puissance de transmission (Pₘ) inférieure à une puissance de transmission maximum (P_{f}) du signal à transmettre en utilisant la première partie.

11. Élément de réseau (15, 21, 51) d'un réseau de communication cellulaire (11) comprenant de multiples stations de base macro (15) commandant au moins une parmi de multiples macro-cellules (13) du réseau cellulaire (11) et au moins une station de base pico (21) commandant au moins une pico-cellule (19) du réseau cellulaire (11), ladite pico-cellule (19) étant située au moins partiellement dans au moins une macro-cellule (13), ledit élément de réseau (15, 21, 51) comprenant des circuits de commande (37, 52) pour la coordination d'interférence intercellulaire conçus pour
- attribuer (57) une première partie (B₁ ; F1,..., F3, F5,...,FN) de ressources de transmission radio (53) du réseau cellulaire (11) et une deuxième partie (B₂ ; F4) desdites ressources de transmission (53) à chacune desdites multiples stations de base macro (15) pour transmettre un signal radio en utilisant la première partie (B₁ ; F1,..., F3, F5,...,FN) et la deuxième partie (B₂ ; F4) desdites ressources de transmission (53),
- limiter une puissance de transmission maximum du signal radio à transmettre en utilisant la deuxième partie (B₂ ; F4) à une limite de puissance de transmission (P_{red}) Inférieure à une puissance de transmission maximum (P_{f}) du signal à transmettre en utilisant la première partie (B₁ ; F1,..., F3, F5,...,FN), et
- attribuer (59) la deuxième partie (B₂ ; F4) desdites ressources de transmission (53) à la station de base pico (21) pour transmettre le signal radio en utilisant la deuxième partie (B₂ ; F4) desdites ressources de transmission (53),
**caractérisé en ce que** les circuits de commande (37) sont conçus pour déterminer au moins une caractéristique (sb, st) de trafic de communication (60) relatif à au moins un terminal (17) enregistré auprès d'une station de base macro (15) et/ou la station de base pico (21) et pour déterminer la limite de puissance de transmission (P_{red}) en fonction de ladite caractéristique (sb, st).

12. Élément de réseau (15, 21, 51) selon la revendication 11, dans lequel les circuits de commande (37, 52) sont conçus pour exécuter un procédé selon l'une des revendications 2 à 10,

13. Élément de réseau selon la revendication 11 ou la revendication 12, dans lequel l'élément de réseau est une station de base macro (15) du réseau cellulaire (11) ou une station de base pico (21) du réseau cellulaire (11).

14. Réseau de communication cellulaire (11) comprenant de multiples stations de base macro (15) commandant au moins une parmi de multiples macro-cellules (13) du réseau cellulaire (11) et au moins une station de base pico (21) commandant au moins une pico-cellule (19) du réseau cellulaire (11), ladite pico-cellule (19) étant située au moins partiellement dans au moins une macro-cellule (13), **caractérisé en ce que** le réseau (11) est conçu pour exécuter un procédé selon l'une des revendications 1 à 10
